# EUROPEAN PATENT APPLICATION

(11) **EP 2 424 193 A1**
(43) Date of publication of application: **29.02.2012**
(21) Application number: 11178417.9
(22) Date of filing: 23.08.2011
(51) Int. Cl.: H04L 29/08, H01R 13/00

(54) **Storage device for data sharing**

(30) Priority: 26.08.2010 TW 099128585
(71) Applicant: Walton Advanced Engineering Inc., Kaohsiung City 806 (TW)
(72) Inventor: Yu, Hong-Chi, 806 Kaohsiung City (TW); Chang, Mao-Ting, 806 Kaohsiung City (TW)
(74) Representative: Viering, Jentschura & Partner

(57) **Abstract**

A storage device for data sharing comprises a memory module, a data storage space and a public program wherein the public program has a communications module, a management module, a partition module and a transmission / reception module, the management module is used to manage a peer list. The present invention under the structure of the peer list delivers reception of a reliable and safe digital content via the P2P technology; data could be effectively transmitted and received by peers distributed in any electronic products via Internet without restrictions of various factors such as realistic distance and specific electronic product during data sharing.

## Description

### BACKGROUND OF THE INVENTION

### 1) FIELD OF THE INVENTION

The present invention relates to a storage device, especially to a storage device for data sharing.

### 2) DESCRIPTION OF THE PRIOR ART

The Internet era has facilitated information sharing accelerated as well as popularization and progress of information technology. In this regard, a variety of products such as computers and communications & consumer electronics have extensively permeated into consumers' lives.

With properties like light, thin, short, and small, high portability, and T-byte or more storage capacity, these portable storage devices, for instance, flash disc, hard disc or other devices with flash memories, have attracted more interests of consumers demanding data sharing.

In virtue of various standard data transfer interfaces such as USB (Universal-Serial-Bus), Mini USB (Mini Universal-Serial-Bus), Micro USB (Micro Universal-Serial-Bus) or e-SATA (External Serial Advanced Technology Attachment) and IEEE1394 available now, these portable storage devices provided with the interfaces thereof have been extensively employed by consumers.

For one portable data storage device employed by a consumer, a user who intends to copy data of Computer A into Computer B should plug the storage device onto a transfer interface of Computer A for data in Computer A copied to the storage device first, and then disconnect the storage device with required data duplicated from Computer A and connect the device thereof onto a transfer interface of Computer B for data originally stored in Computer A copied or moved to and shared by Computer B.

However, there are still some problems existing in the method for files transmitted between computers: (1) Data not immediately and efficiently shared due to an actual distance between computers; (2) Transmission efficiency simply reduced by 50% during a procedure of the same data transmitted twice in a way of a two-stage "copy in and copy out".

Furthermore, the Peer to Peer (P2P) network is one decentralized technology-based network which technically depends on calculation abilities and bandwidths of participants (peers) in networks rather than a few servers used to transmit data. In a P2P network, there is one important feature of resources such as storage space and calculation ability provided by all peers (for transmission and reception) so that the capability of a whole system is expanded with more and more peers joining and corresponding requests increased. Among multiple applications of this type of network, the P2P network used to provide documents or other contents (such as audio, video or data with various formats) for sharing has been extensively applied.

However, there still have been some problems existing in the powerful P2P network: (1) Inconvenience: Data (file) is not transmitted by one consumer who is away from one immobile personal computer (PC) in which utilities for data /file sharing are installed under the current P2P technology; (2) Unreliability and unsafety: Validity of each shared data is not effectively verified in the network under assistance of servers for directories established due to no central control system existing in the P2P network for data sharing.

### SUMMARY OF THE INVENTION

In order to solve the said problems, the present invention provides a storage device for data sharing comprising a memory module, a data storage space and a public program wherein the public program has a communications module, a management module, a partition module and a transmission / reception module and the management module is used to manage a peer list.

When at least two storage devices are plugged onto two different computers and logged into a central server via Internet, these two devices thereof are referred to as "peers" and developed to be a peer group for one peer's identity (ID information) recognized by the other one, files shared each other and a peer list (or directory) provided to the central server. Accordingly, there is at least one peer, which issues a request to the central server, regarded as a "reception peer" in the peer group, and other peers possessing the file(s) requested by the reception peer in the peer group are taken as "transmission peers".

The present invention particularly emphasizes a peer list prepared in a management module and owned by a specific peer. Additionally, the peer list should be uploaded to the central server for unified management. Therefore, the file sharing in the present invention is delivered under the structure of the peer list.

As a result, the principal object of the present invention is to deliver both files shared by peers (transmission peers and reception peers) and received data reliable and safe under the structure thereof.

The other object of the present invention is to deliver data received and transmitted by all peers in all electronic products via Internet and data effectively shared but not restricted by any factor such as actual distance and specific electronic product.

To this end, the present invention has the principal technical measures delivered with the following techniques. As a data storage device for data sharing, the present invention comprises a memory module, a data storage space and a public program: the memory module comprises a substrate and a plurality of metal contacts wherein the substrate has an outer surface and an inner surface provided with at least a memory chip as well as at least a control element and the metal contacts are installed at the outer surface's one end and electrically connected to the memory chip and the control element via the substrate; additionally, the data storage space preserved in the memory chip is used to store at least one digital content to be shared; furthermore, the public program installed in the memory chip comprises a communications module, a management module, a partition module and a transmission / reception module; the communications module is used to transmit messages to or receive messages from at least a central server or at least a peer; the management module is used to manage a peer list; the partition module is used to separate the digital data into a plurality of blocks which are sequentially labeled for identification; the transmission / reception module is used to transmit or receive digital content via Internet.

The purposes and the technical issues with respect to the present invention are further embodied with the following technical measures.

In the said storage device for data sharing, the public program comprises a data selection module used to control a digital content to be shared.

In the said storage device for data sharing, the transmission / reception module is used to transmit a digital content to or receive a digital content from another peer.

In the said storage device for data sharing, the peer list comprises information such as peer ID.

In the said storage device for data sharing, the communications module, the management module and the transmission / reception module are exported to an electronic product's display with a user interface.

In the said storage device for data sharing, the metal contacts are compatible to at least one data transfer interface among Universal-Serial-Bus (USB), Mini Universal-Serial-Bus (Mini USB), Micro Universal-Serial-Bus (Micro USB) or External Serial Advanced Technology Attachment (e-SATA).

In contrast to prior arts, the present invention is effective in: (1) File sharing and reception of reliable and safe data under the structure of the peer list; (2) Data effectively transmitted and received by peers distributed among any electronic products via Internet for data sharing without restrictions of multiple factors such as realistic distance and specific electronic product.

### BRIEF DESCRIPTIONS OF THE DRAWINGS

FIG. 1 is the sectional view of the present invention of a storage device for data sharing.
FIG. 2 is the block diagram of the present invention of a storage device for data sharing.
FIG. 3 is the schematic diagram of the present invention of a storage device for data sharing during operation.

### DETAILED DESCRIPTIONS OF THE PREFERRED EMBODIMENTS

For objects, characteristics, and effects obviously and easily understood, the preferred embodiments of the present invention are particularly interpreted as follows:

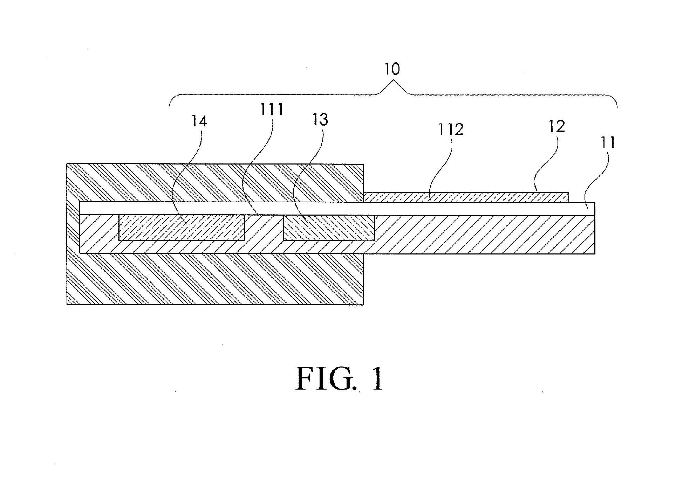

FIGS. 1, 2 and 3 indicate the principal embodiments of the present invention, a storage device for data sharing, comprising a memory module (10), a data storage space (20) and a public program (30).

Referring to FIG. 1 which illustrates the memory module (10) is a Chip-On-Board (COB) package and comprises a substrate (11) and a plurality of metal contacts (12) wherein the substrate has an inner surface (111) as well as an outer surface (112) and the inner surface (111) is provided with at least a memory chip (13) and at least a control chip (14) which are electrically connected to the substrate (11) by means of a wire bonding or a flip chip technique (not shown in figures). The metal contacts (12) are installed at one end of the outer surface (112), and the substrate (11) is a high-density double-sided multi-layer printed circuit board with circuits (not shown in the figure) developed inside as an interface for transmit of electricity and allows the metal contacts (12) to be electrically connected to the memory chip (13) and the control element (14) via the substrate (11). Preferably, the metal contacts (12) are compatible to at least one data transfer interface among Universal-Serial-Bus (USB), Mini Universal-Serial-Bus (Mini USB), Micro Universal-Serial-Bus (Micro USB) or External Serial Advanced Technology Attachment (e-SATA). In this embodiment, we take the metal contacts (12) compatible to the Universal-Serial-Bus (USB) interface as an example. Additionally, the memory chip (13) could be different types of memories, for instance, FLASH, Static-Random-Access-Memory (SRAM), Application-Specific-Integrated-Circuit (ASIC), memory chip or Synchronous-Dynamic-Random-Access-Memory (SDRAM).

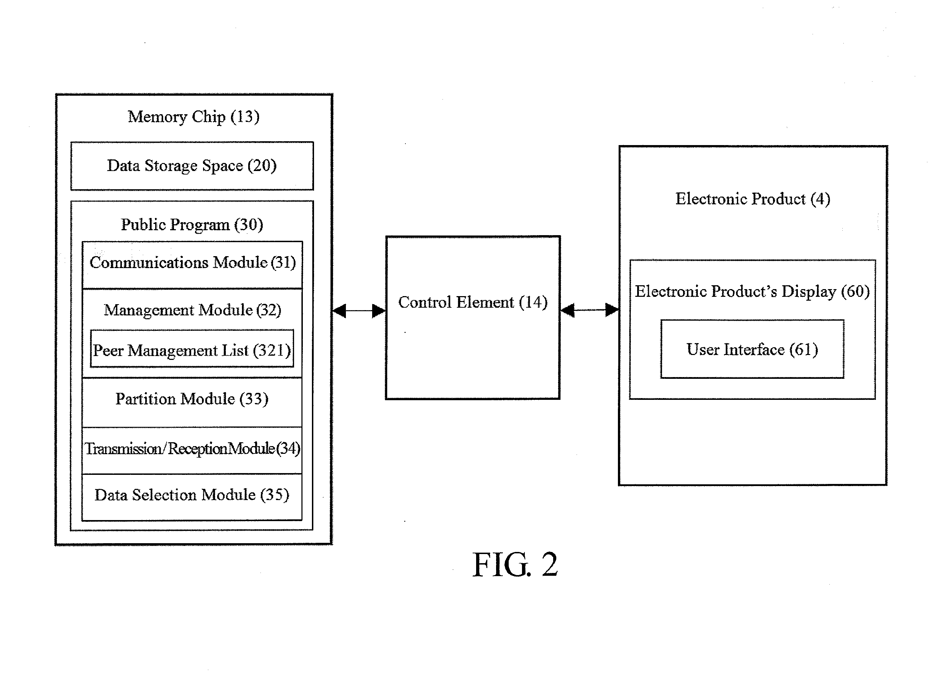

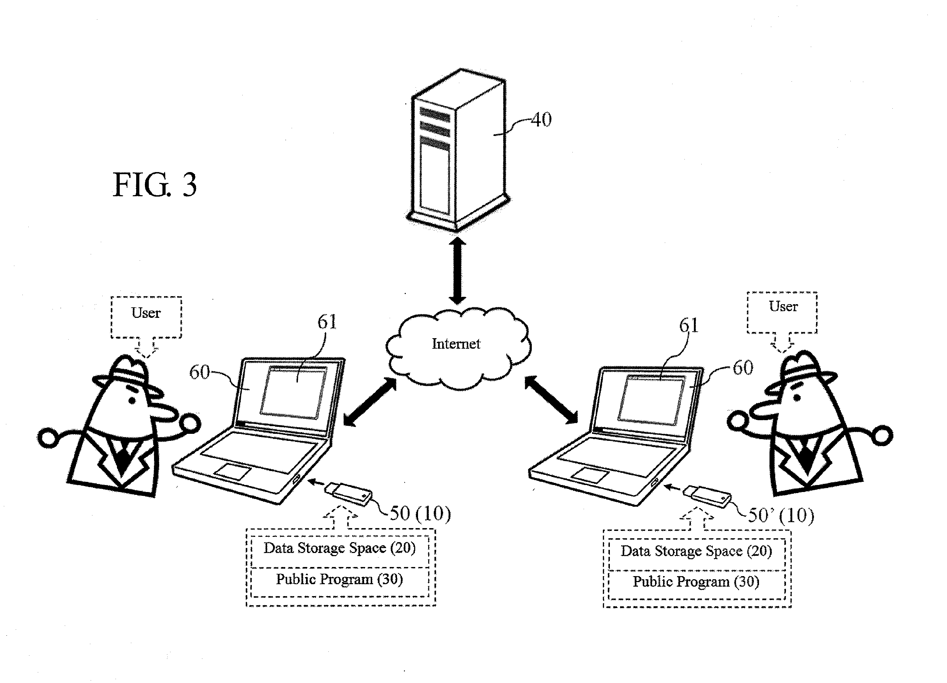

Referring to FIGS. 2 and 3 which illustrate the data storage space (20) and the public program (30) are prepared in the memory chip (13) for delivery of commands between the control element (14) and an electronic product, and the data storage space (20) and the public program (30) are preferably displayed on an electronic product's display (60) with a user interface (61). In this regard, the data storage space (20) is used to save at least a digital content to be shared, that is, the digital content saved in the present invention is predetermined data to be shared. Preferably, the public program (30), however, comprises a data selection module (35) used in controlling a digital content to be shared and further including, without limitation, a folder with one user's digital content to be shared only rather than other digital contents neither shared nor revealed.

In addition, the public program (30) also comprises a communications module (31), a management module (32), a partition module (33) and a transmission / reception module (34) wherein the communications module (31) is used to transmit messages to or receive messages from at least a central server (40) or at least a peer (50'), the management module (32) is used to manage a peer list (321) with information of peer ID, the partition module (33) is used to separate the digital content into several blocks sequentially labeled for identification, and the transmission / reception module (34) is used to transmit or receive digital contents via Internet.

Specifically, the present invention is not limited to the P2P-based structure but a variety of topology in practice. The present invention is intended for data sharing with the P2P structure based on the peer list (321).

In this embodiment, the storage device in the present invention plugged into any electronic product such as computer and logged in at least a central server (40) via Internet by one user will become a peer (50); then, the identity of another peer (50') verified by the peer (50) and vice versa implies the peer (50') (or the peer (50)) is incorporated into the peer list (321) of the peer (50) (or the peer (50')) for files shared each other. In this embodiment, the peer (50') belongs to the peer list (321) owned by the peer (50). Preferably, the peer list (321) in the management module (32) could be exported to an electronic product's display (60) and displayed to a peer (50) (user) for deletion or addition of the peer list (321) via a user interface (61).

In the case of a digital content shared to other peers by one user, the partition module (33) of the public program (30) separates the digital content into several blocks which are sequentially labeled for identification. Then, the communications module (31) of the public program (30) will transmit information such as peer ID included in the peer list (321) and a digital content to be shared such as file list to the central server (40). In this regard, the content of a file list comprises various messages, for example, file name, file size, identifier, time, etc. Preferably, the communications module (31) could be exported to an electronic product's display (60) for relevant information transmitted to a central server by the peer (50) (user) via a user interface (61).

Accordingly, another peer (50') logging in the central server (40), activating the communications module (31) via a user interface (61) and issuing a request for searching a specific digital content to the central server (40) will become a reception peer, and the central server (40) searches any peer (50) possessing the specific digital content from the peer list (321) of the reception peer thereof and responds it for any information, e.g., peer ID and file list, with respect to the peer (50) as a transmission peer holding the specific digital content. Additionally, the specific digital content includes, without limitation, picture, image, sound, text, etc.

Then, a contact between the communications module (31) of the reception peer and the communications module (31) of the transmission peer will be established via Internet; the specific digital content is transmitted to the reception peer from the transmission peer's transmission / reception module (34) and received by the reception peer's transmission / reception module (34) comparatively. Preferably, the transmission / reception module (34) could be exported to an electronic product's display (60) for a digital content transmitted (received) by the transmission peer (reception peer) (user) via a user interface (61).

It will be seen from this that each peer could become a transmission peer or a reception peer under the P2P technology and the peer list employed by the present invention; in addition, a peer could play both roles of a transmission peer and a reception peer for data transmitted and received; further, a digital content could be transmitted to multiple reception peers from a peer as a transmission peer, and lots of digital contents transmitted from multiple transmission peers could be received by a peer as the reception peer.

With the above descriptions summarized, the present invention under the structure of the peer list and with the P2P technology is effective in: (1) Reception of reliable & safe digital content; (2) Data effectively transmitted and received by peers distributed in any electronic products via Internet for data sharing without restrictions of multiple factors such as realistic distance and specific electronic product.

Despite different communications procedures and information required by each peer and a central server in virtue of multiple types of topology in the P2P technology, the present invention should not be restricted to a specific topology of the P2P technology. Any change equivalent to applications of specifications, claims, or drawings under the structure of a peer list shall be rationally covered in claims for the present invention.

Accordingly, the present invention different from general conventional storage devices but referred to as creative work among similar products meets patentability and is applied for the patent.

It must be reiterated that the said descriptions are only the preferred embodiments of the present invention and any equivalent change in specifications, claims, or drawings of the present invention is still within the technical scope of the present invention which accordingly depends on claims specified hereinafter.

## Claims

1. A storage device for data sharing, comprising:
a memory module (10) comprises a substrate (11) and a plurality of metal contacts (12) wherein the substrate (11) has an outer surface (112) and an inner surface (111) provided with at least a memory chip (13) as well as at least a control element (14) and the metal contacts (12) are installed at one end of the outer surface (112) and electrically connected to the memory chip (13) and the control element (14) via the substrate (11);
a data storage space (20) prepared in the memory chip (13) is used to store at least a digital content to be shared;
a public program (30) installed in the memory chip (13) comprises:
a communications module (31) used in transmitting messages to or receiving messages from at least a central server (40) or at least a peer (50');
a management module (32) used to control a peer list (321);
a partition module (33) used to separate the digital content into a plurality of blocks sequentially labeled for identification;
a transmission / reception module (34) used to transmit or receive a digital content via Internet.

2. The storage device for data sharing according to Claim 1 wherein the public program (30) comprises a data selection module (35) used in controlling a digital content to be shared.

3. The storage device for data sharing according to Claim 1 wherein the transmission / reception module (34) is used to transmit a digital content to or receive a digital content from another peer.

4. The storage device for data sharing according to Claim 1 wherein the peer list (321) comprises information such as peer ID.

5. The storage device for data sharing according to Claim 1 wherein the communications module (31), the management module (32) and the transmission / reception module (34) are exported to an electronic product's display (60) with a user interface (61).

6. The storage device for data sharing according to Claim 1 wherein the metal contacts (12) are compatible to at least one data transfer interface among Universal-Serial-Bus (USB), Mini Universal-Serial-Bus (Mini USB), Micro Universal-Serial-Bus (Micro USB) or External Serial Advanced Technology Attachment (e-SATA).
